# EUROPEAN PATENT APPLICATION

(11) **EP 4 502 930 A1**
(43) Date of publication of application: **05.02.2025**
(21) Application number: 23778954.0
(22) Date of filing: 15.02.2023
(51) Int. Cl.: G06T 7/00, B29C 48/92

(54) **SCREW PIECE ASSEMBLY ERROR DETECTING DEVICE, SCREW PIECE ASSEMBLY ERROR DETECTING METHOD, AND COMPUTER PROGRAM**

(30) Priority: 31.03.2022 JP 2022060713
(71) Applicant: The Japan Steel Works, Ltd., Tokyo 141-0032 (JP)
(72) Inventor: ODA, Tomoya, Tokyo 141-0032 (JP); FUKUZAWA, Yohei, Tokyo 141-0032 (JP); OKIMOTO, Tasuku, Tokyo 141-0032 (JP)
(74) Representative: Simmons & Simmons LLP (Munich)
(86) International application number: PCT/JP2023/005096
(87) International publication number: WO 2023/188920

(57) **Abstract**

This screw piece assembly error detecting device comprises an acquiring unit for acquiring appearance data representing the appearance of a plurality of screw pieces arranged in each of two screws, or the appearance of the two screws, and a calculating unit for calculating a difference between the plurality of screw pieces forming a first screw and the plurality of screw pieces forming a second screw, on the basis of the acquired appearance data, and the screw piece assembly error detecting device detects screw piece assembly errors of each screw.

## Description

### Technical Field

The present disclosure relates to a screw piece assembly error detection device, a screw piece assembly error detection method and a computer program.

### Background Art

A twin-screw extruder includes two screws that rotate in mesh with each other. Each of the screws is constituted by multiple types of screw pieces integrated together. The screw pieces are checked for an assembly error with eyes. In addition, the screw pieces are checked for an assembly error based on a feel when been combined and rotated.

### Citation List

### Patent Literature:

Patent Literature 1: Japanese Patent Application Laid-Open Publication No. 2018-43419

### Summary of Invention

### Technical Problems

Such checking by human, however, may involve a case of overlooking an assembly error. A twin-screw extruder, which is attached with a misassembled screw and operated, may cause damage to the screws.

The object of the present disclosure is to provide a screw piece assembly error detection device, a screw piece assembly error detection method and a computer program that are capable of detecting an assembly error of multiple screw pieces that constitute the screws for a twin-screw extruder.

### Solution to Problems

A screw piece assembly error detection device according to one aspect of the present disclosure is a screw piece assembly error detection device comparing constructions of two screws for a twin-screw extruder constructed by assembling a plurality of screw pieces and detecting an assembly error of the screw pieces, comprising: an acquisition unit that acquires appearance data indicating an appearance of the plurality of screw pieces aligned to constitute the two screws or of the two screws; and an arithmetic unit that calculates a difference between the plurality of screw pieces that constitute a first screw of the screws and the plurality of screw pieces that constitute a second screw of the screws, based on the acquired appearance data.

A screw piece assembly error detection method according to one aspect of the present disclosure is a screw piece assembly error detection method for comparing constructions of two screws for a twin-screw extruder constructed by assembling a plurality of screw pieces and detecting an assembly error of the screw pieces, comprising: acquiring appearance data indicating an appearance of the plurality of screw pieces aligned to constitute the two screws or of the two screws; and calculating a difference between the plurality of screw pieces that constitute a first screw of the screws and the plurality of screw pieces that constitute a second screw of the screws, based on the acquired appearance data.

A computer program according to one aspect of the present disclosure is a computer program causing a computer to execute processing of comparing constructions of two screws for a twin-screw extruder constructed by assembling a plurality of screw pieces and detecting an assembly error of the screw pieces, comprising: acquiring appearance data indicating an appearance of the plurality of screw pieces aligned to constitute the two screws or of the two screws; and calculating a difference between the plurality of screw pieces that constitute a first screw of the screws and the plurality of screw pieces that constitute a second screw of the screws, based on the acquired appearance data.

### Advantageous Effects of Invention

According to the present disclosure, an assembly error of multiple screw pieces that constitute the screws for a twin-screw extruder can be detected.

### Brief Description of Drawings

FIG. 1 is a schematic diagram illustrating an example of the configuration of a screw piece assembly error detection device according to Embodiment 1.
FIG. 2 is a schematic diagram illustrating an example of the configuration of a screw.
FIG. 3 is a flowchart depicting a processing procedure of a screw piece assembly error detection method according to Embodiment 1.
FIG. 4 is a schematic diagram illustrating a screw image.
FIG. 5 is a conceptual diagram illustrating a method of extracting a partial image of the screws.
FIG. 6 is a conceptual diagram illustrating a method of detecting an assembly error of the screw pieces.
FIG. 7 is a schematic diagram illustrating an assembly error detection result display screen.
FIG. 8 is an explanatory view illustrating an actual example of a detection result of an assembly error.
FIG. 9 is a schematic diagram illustrating an example of the configuration of a screw piece assembly error detection device according to Embodiment 2.
FIG. 10 is a conceptual diagram illustrating an object detection learning model according to Embodiment 2.
FIG. 11 is a flowchart depicting a processing procedure of the screw piece assembly error detection method according to Embodiment 2.
FIG. 12 is a conceptual diagram illustrating a detection result of an object.
FIG. 13 is a table depicting a detection result of the object.
FIG. 14 is a schematic diagram illustrating another example of a method of capturing appearance data.
FIG. 15 is a schematic diagram illustrating an example of the configuration of a screw piece assembly error detection device according to Embodiment 3.
FIG. 16 is a conceptual diagram illustrating a type recognition detection learning model according to Embodiment 3.
FIG. 17 is a flowchart depicting a processing procedure of a screw piece assembly error detection method according to Embodiment 3.

Specific examples of a screw piece assembly error detection device, a screw piece assembly error detection method and a computer program according to embodiments of the present invention will be described below with reference to the drawings. It should be noted that the present invention is not limited to these examples, and is indicated by the scope of claims, and is intended to include all modifications within the meaning and scope equivalent to the scope of claims. Furthermore, at least parts of the following embodiment and modifications may arbitrarily be combined.

Hereinafter, the present invention will be specifically described with reference to the drawings illustrating the embodiments thereof.

### Embodiment 1

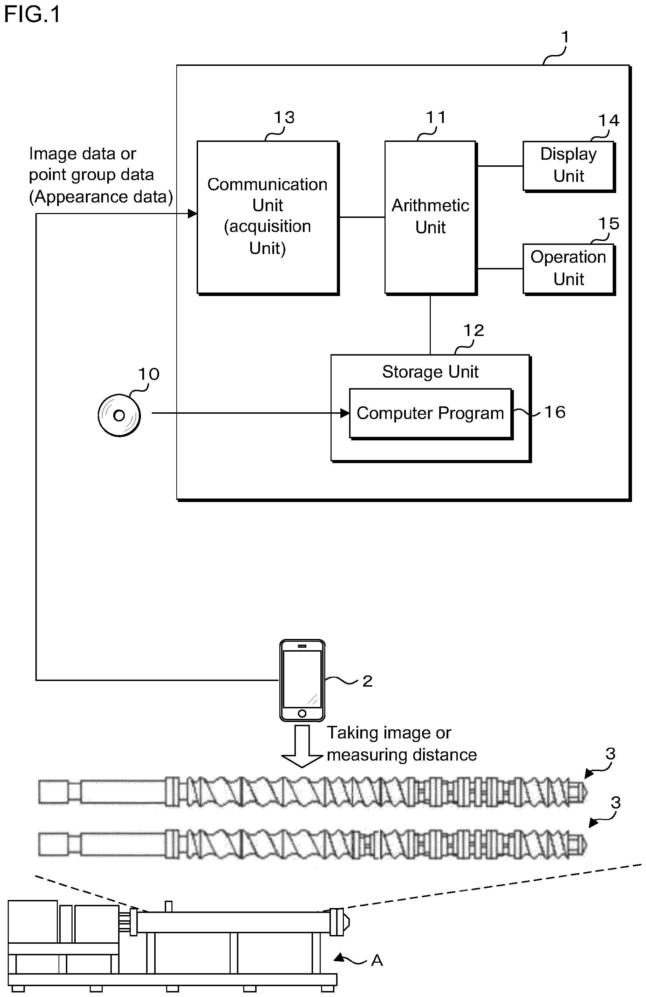

FIG. 1 is a schematic diagram illustrating an example of the configuration of a screw piece assembly error detection device according to Embodiment 1. The screw piece assembly error detection device according to Embodiment 1 is a computer that executes arithmetic processing for detecting an assembly error of multiple screw pieces 3a that constitute two screws 3 for a twin-screw extruder A.

The twin-screw extruder A includes a cylinder with a heater, the two screws 3 that are provided so as to be drivable in the rotary direction within the cylinder, and melt/plasticize and knead raw materials and a rotary motor that rotates the screws 3.

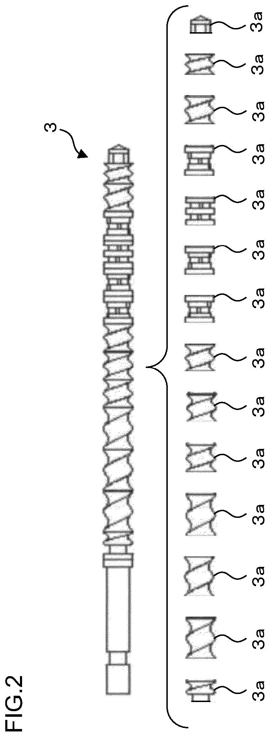

FIG. 2 is a block diagram illustrating an example of the configuration of one of the screws 3. As for each screw 3, multiple types of screw pieces 3a are combined and integrated together to form a bar of screw 3. A flight screw-shaped forward flight piece that carries raw materials in a forward direction, a reverse flight piece that carries raw materials in a reverse direction, a kneading piece that kneads raw materials and the like are combined in an order and at positions according to the characteristics of the raw materials, to form the screw 3.

The screw piece assembly error detection device 1 includes an arithmetic unit 11, a storage unit 12, a communication unit 13, a display unit 14 and an operation unit, as hardware structures.

The arithmetic unit 11 is a processor having an arithmetic circuit such as a CPU (Central Processing Unit), an MPU (Micro-Processing Unit), an Application Specific Integrated Circuit (ASIC), a Field-Programmable Gate Array (FPGA) or the like and an internal storage device such as a ROM (Read Only Memory), a RAM (Random Access Memory), an I/O terminal or the like. The arithmetic unit 11 may include one or more arithmetic circuits such as a GPU (Graphics Processing Unit), a TPU (Tensor Processing Unit) or an AI chip (AI semiconductor) dedicated to image processing related to object detection and image recognition. The arithmetic unit 11 reads and executes a computer program (program product) stored in the storage unit 12 to detect an assembly error of the screw pieces 3a. Functional parts of the screw piece assembly error detection device 1 may be realized in software, or may partially or entirely be realized in hardware.

The storage unit 12 is a storage such as a hard disk, an EEPROM (Electrically Erasable Programmable ROM), a flash memory or the like. The storage unit 12 stores various programs to be executed by the arithmetic unit 11 and various data necessary for the processing by the arithmetic unit 11. In the present embodiment, the storage unit 12 stores a computer program 16 to be executed by at least the arithmetic unit 11.

The computer program 16 may be written into the storage unit 12 at the manufacturing stage of the screw piece assembly error detection device 1 or may be delivered through the network from another information processing apparatus. The screw piece assembly error detection device 1 acquires the computer program 16 through communication and writes it into the storage unit 12. The computer program 16 may be readably recorded in a recording medium 10 including a semiconductor memory such as a flash memory, an optical disk, a magneto-optical disk and a magnetic disk. The screw piece assembly error detection device 1 reads the computer program 16 and stores it in the storage unit 12.

The communication unit 13 is a communication circuit that transmits and receives data to/from a measurement device 2 in a wired or wireless manner. The communication unit 13 may be a circuit that reads data from a memory of the measurement device 2 or a recording medium removed from the measurement device 2. The communication unit 13 functions as an acquisition unit that acquires appearance data indicating the appearance of the two screws 3 or of the multiple screw pieces 3a aligned to constitute each of the two screws 3.

The measurement device 2 is equipment that can acquire appearance data indicating the appearance of the screws 3 or of the aligned multiple screw pieces 3a. The communication equipment is a camera or a video camera for taking an image of the screws 3, for example. The communication equipment may be a smartphone, a tablet terminal, a laptop PC (personal computer) or the like that has a light receiving lens and an image sensor. The measurement device 2 with an image taking function transmits image data representing the appearance of the two screws 3 as appearance data to the screw piece assembly error detection device 1. The image data is data containing the pixel values of multiple pixels aligned horizontally and vertically.

A method of taking an image of the elongated screws 3 is not particularly limited, but may include taking an overall image of the two screws 3 to fit into one image, or combining taken images of one ends and the other ends of the screws 3 to generate one composite image containing the entire two screws 3. In addition, the two screws 3 may be imaged while being scanned from one end to the other, to produce a composite image containing the entire two screws 3. The taken image of the two screws 3 may be moving images.

The measurement device 2 may be a range sensor that obtains point group data by measuring multiple points on the surface of the screws 3. The range sensor includes an infrared sensor such as LiDAR. The infrared sensor is provided with a light emitting element that emits infrared rays and a light receiving element that receives infrared rays emitted to and reflected from the screws 3. The light emitting element is an infrared laser, such as a Vertical Cavity Surface Emitting LASER (VCSEL), which irradiates the screws 3 with a dot pattern arranged vertically and horizontally. The light receiving element is, for example, a CMOS image sensor. The infrared sensor calculates the distance to the screws 3 based on the round-trip time from when light is emitted to the screws 3 to when it is reflected back. The measurement device 2 calculates the distance to each dot pattern and transmits, as appearance data, the point group data, which is the three-dimensional information of the two screws 3 to the screw piece assembly error detection device 1. The point group data represents multiple points on the surface of the two screws 3 as three-dimensional coordinates, for example.

The screw piece assembly error detection device 1 acquires, through the communication unit 13, image data or point group data as appearance data that is transmitted from the measurement device 2 and stores it in the storage unit 12. The arithmetic unit 11 can convert the point group data into voxel data. The arithmetic unit 11 can also convert the point group data or the voxel data into two-dimensional image data.

For the sake of simplicity, an example where a screw configuration is inferred using two-dimensional image data is described below. A two-dimensional image of the two screws 3 obtained by taking an image of or measuring the distance from the two screws 3 is referred to as a screw image, and data of the two-dimensional image is referred to as screw image data.

The display unit 14 is a display device such as a liquid crystal display panel, an organic EL display panel or the like. The display unit 14 displays the detection result of an assembly error of the screw pieces according to the control by the arithmetic unit 11.

The operation unit 15 is an input device such as a touch panel, a mouse, an operation button, a keyboard or the like that accepts the operation by the user who uses the screw piece assembly error detection device 1.

The screw piece assembly error detection device 1 described above may be a multi-computer consisting of multiple computers, and may be a virtual machine virtually constructed by software. In addition, part or all of the screw piece assembly error detection device 1 may be constructed as a cloud server.

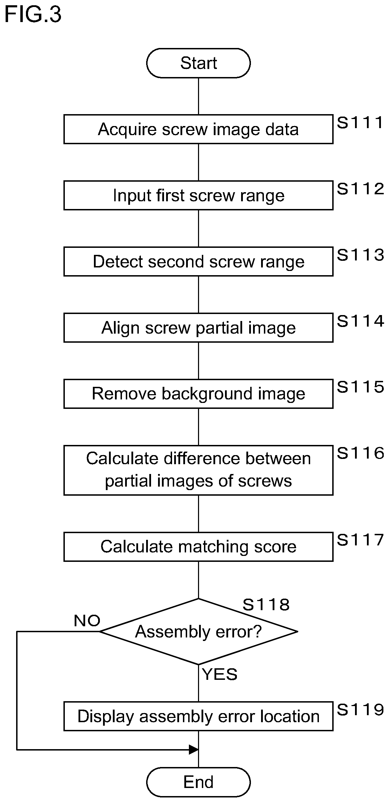

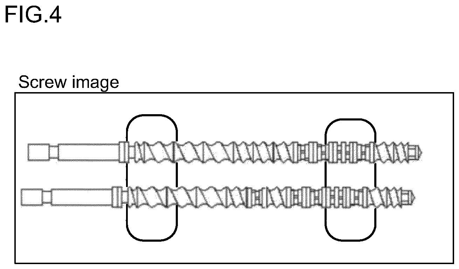

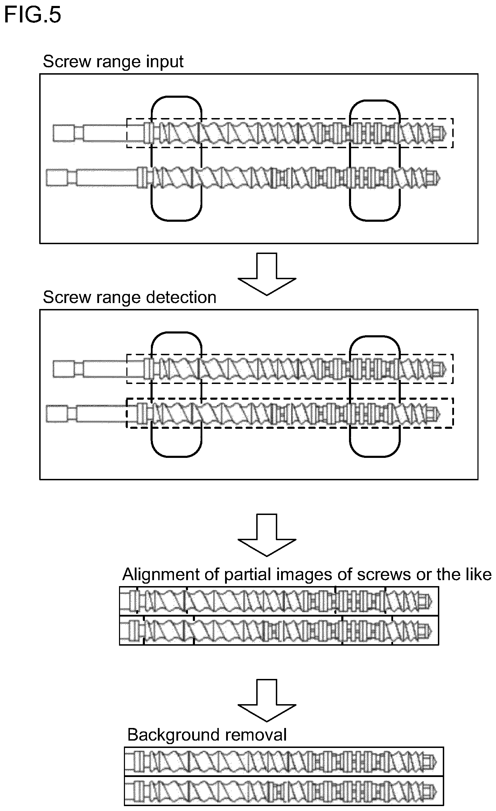

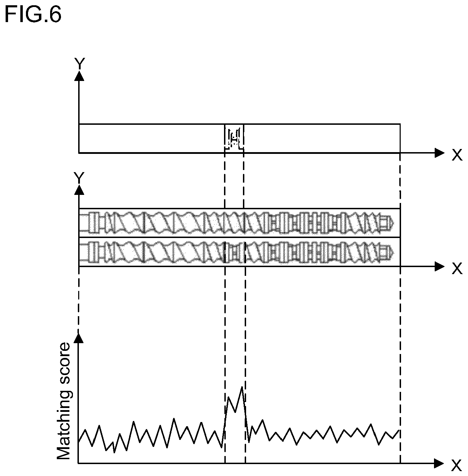

FIG. 3 is a flowchart depicting a processing procedure of a screw piece assembly error detection method according to Embodiment 1. FIG.4 is a schematic diagram illustrating a screw image. FIG. 5 is a conceptual diagram illustrating a method of extracting a partial image of the screws. FIG. 6 is a conceptual diagram illustrating a method of detecting an assembly error of the screw pieces 3a. The arithmetic unit 11 of the screw piece assembly error detection device 1 acquires screw image data from the measurement device 2 via the communication unit 13 (step S111). The screw image contains an image of the two screws 3 as illustrated in FIG. 4. In the example illustrated in FIG. 4, the screw image is obtained by taking an image of the two screws 3 supported by two pedestals, the screw image containing an image of the pedestals in the background. The screw image data is data representing the appearance of the two screws 3 or of the multiple screw pieces 3a aligned to constitute each of the two screws 3.

The arithmetic unit 11 then accepts input of a first screw range indicating the range of the first screw 3 in the screw image (step S112). The user of the screw piece assembly error detection device 1 is able to designate the first screw range in the screw image by operating the operation unit 15. The first screw range is the range as a target to be detected for an assembly error of the screw pieces 3a, in particular the range surrounding a part of the image of the first screw 3. For example, for "screw range input" illustrated in FIG. 5, the range surrounded by a dashed rectangular frame is the first screw range.

The arithmetic unit 11 then detects a second screw range (step S113). For example, the arithmetic unit 11 detects the area where an image similar to that of the first screw range is present as the second screw range. The second screw range is the range as a target to be detected for an assembly error of the screw pieces 3a, in particular the range surrounding a part of the image of the second screw 3. For example, for "screw range detection" illustrated in FIG. 5, the range surrounded by a dashed rectangular frame on the lower side is the second screw range.

Note that the arithmetic unit 11 may be configured to detect both of the first screw range and the second screw range by image processing such as pattern matching.

The part of the image of the first screw 3 is called a first screw partial image, and the part of the image of the second screw 3 is called a second screw partial image. The first screw partial image and the second screw partial image are collectively referred to as the screw partial images as appropriate.

Next, the arithmetic unit 11 aligns the first screw partial image with the second screw partial image in the lengthwise direction (step S114). As illustrated under "screw range detection" in FIG. 5, the first screw partial image and the second screw partial image are misaligned in the lengthwise direction. As illustrated under "alignment of the partial images of the screws or the like" in FIG. 5, by the processing at step S114, the first screw partial image and the second screw partial image are aligned. The alignment in the lengthwise direction is carried out on a pixel basis.

The arithmetic unit 11 further performs image processing such as enlargement or reduction, rotation and distortion removal of the first and second screw partial images so that the first screw partial image and the second screw partial image have substantially the same contour and size.

Note that the arithmetic unit 11 may perform translation in the lengthwise direction, rotation, enlargement and reduction of the partial images of the screws by performing affine transformation on the first screw partial image or the second screw partial image. The arithmetic unit 11 may perform a nonlinear transformation on the first screw partial image or the second screw partial image if distortion removal of the partial images of the screws is also required.

The arithmetic unit 11 then removes the background image for the first screw image contained in the first screw range and the background image for the second screw image contained in the second screw range (step S115). As illustrated under "alignment of the partial images of the screws or the like" in FIG. 5, the first screw range and the second screw range contain background images, such as images of the pedestals. As illustrated under "background removal" in FIG. 5, by the processing at step S115, the background images other than the first screw partial image and the second screw partial image are removed. The background for the partial images of the screws after removal of the background image is a black image with a luminance value of zero, for example.

The arithmetic unit 11 then calculates the difference between the partial images of the screws (step S116). The arithmetic unit 11 calculates, on a pixel basis, the magnitude of the difference between the luminance values of the first screw partial image and the second screw partial image. An image containing a difference as a pixel value is called a screw difference image.

The drawing at the center in FIG. 6 is a schematic diagram illustrating the first screw partial image and the second screw partial image, and the drawing at the upper part in FIG. 6 is a schematic diagram illustrating a screw difference image. In the example in FIG. 6, the screw pieces 3a located at the central portion of the two screws 3 are different from each other. It can be seen that the difference in the screw pieces 3a located at the central portion between the screw partial images is reflected on the screw difference image. The portion where no difference in the luminance of the partial images of the screws is present corresponds to a black image part of the screw difference image while the portion where a difference in the luminance of the partial images of the screws is present corresponds to a high-luminance image part of the screw difference image.

The arithmetic unit 11 then calculates, as a matching score (index value), the average luminance value of the difference image for each position in the lengthwise direction (step S117). For example, if the X and Y coordinate position of a pixel in the difference image is denoted as (x, y), and the pixel value (the magnitude of the difference) at the pixel position is represented as D (x, y), the matching score at any position in the lengthwise direction x = x0 is expressed as Σ D (x0, y)/(y0+1). "Σ" is the sum of the pixel values D (x0, 0), D (x0, 1), ... D (x0, y0) up to y= 0, 1, 2, ...y0.

FIG. 6 depicts, at the lower part, a graph of the matching score. The horizontal axis represents a lengthwise position (X coordinate) of the screw difference image, and the vertical axis represents the matching score. It can be seen that the value of the matching score is greater at the portion where the assembly error of the screw pieces 3a is present.

The average value of the pixel values is an example of the matching score. The calculation method of the matching score is not particularly limited as long as the matching score is a value indicating the difference between the first screw partial image and the second screw partial image.

The arithmetic unit 11 then determines the presence or absence of an assembly error of the screw pieces 3a (step S118). For example, the arithmetic unit 11 determines the presence or absence of a location where the matching score is equal to or greater than a predetermined threshold. Furthermore, the arithmetic unit 11 may determine the presence or absence of a region where the moving average value of the matching scores in the lengthwise direction is equal to or greater than a predetermined threshold. Moreover, the arithmetic unit 11 may detect an abnormal value of the matching scores in the lengthwise direction of the screw difference image and determine the presence or absence of an assembly error depending on the presence or absence of the abnormal value. In addition, the arithmetic unit 11 may determine a difference by an object detection learning model or image processing, irrespective of the matching score.

If determining that no assembly error is present (step S118: NO), the arithmetic unit 11 ends the processing. If determining that an assembly error is present (step S118: YES), the arithmetic unit 11 displays the location where the assembly error of the screw pieces 3a is present, on the display unit 14 (step S119).

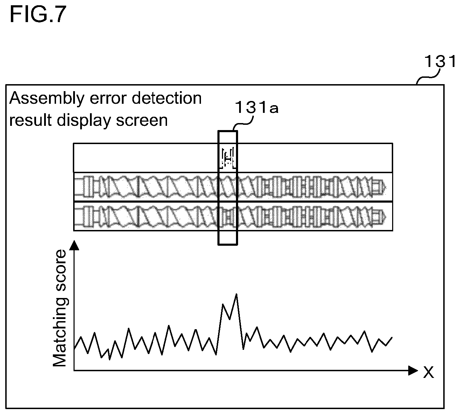

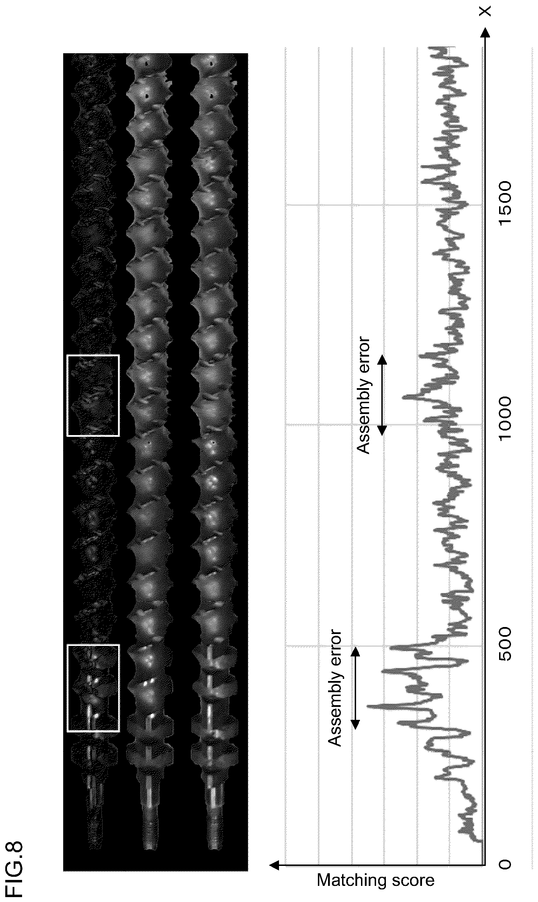

FIG. 7 is a schematic diagram illustrating an assembly error detection result display screen 131, while FIG. 8 is an explanatory view illustrating an actual example of a detection result of an assembly error. At step S119, the arithmetic unit 11 displays the assembly error detection result display screen 131 on the display unit 14. The assembly error detection result display screen 131 contains the first screw partial image, the second screw partial image and the screw difference image. The arithmetic unit 11 may display the first screw partial image, the second screw partial image and the screw difference image in such a manner that they are lined up vertically while the corresponding positions thereof in the lengthwise direction are aligned with one another.

The arithmetic unit 11 further displays a check image 131a representing the location where an assembly error of the screw pieces 3a is present. The location where an assembly error of the screw pieces 3a is present is a region where the moving average of the matching scores is equal to or greater than a threshold, for example. The check image 131a is, for example, a rectangular frame image enclosing the first screw partial image, the second screw partial image and the screw difference image that are contained in the region.

The rectangular frame image is one example, and may be a round image, an elliptical image, or an arrow image indicating a location where an assembly error of the screw pieces 3a is present. Moreover, the arithmetic unit 11 may be configured to display a location where an assembly error is present by changing the color of the first screw partial image and the second screw partial image corresponding to such a location where the assembly error is present. In addition, the arithmetic unit 1 may display the location where the assembly error of the screw pieces 3a is present by displaying the numerical value indicating the position in the lengthwise direction.

The assembly error detection result display screen 131 may also contain a graph of the matching score. The horizontal axis of the graph represents the position in the lengthwise direction of the screw difference image, while the vertical axis thereof represents the matching score.

The screw piece assembly error detection device 1 may further be equipped with a speaker or a light emitting device that, if detecting an assembly error of the screw pieces 3a, reports the presence of the assembly error to the user with sound or light. The screw piece assembly error detection device 1 may be configured to send report data for reporting an assembly error of the screw pieces 3a to a communication terminal of the user or a management device of the twin-screw extruder A.

The screw piece assembly error detection device 1 according to Embodiment 1 thus configured can detect an assembly error of the screw pieces 3a that constitute the screws 3 by comparing the screw partial images of the two screws 3 loaded in the twin-screw extruder A. This allows for detection of an assembly error of the screw pieces 3a without relying on human hands.

**In** addition, the screw piece assembly error detection device 1 can visually display the location where an assembly error of the screw pieces 3a is present on the detection result display screen 131. Specifically, the first screw partial image and the second screw partial image may be displayed side by side, which may indicate the location where an assembly error of the screw pieces 3a is present by the check image 131a.

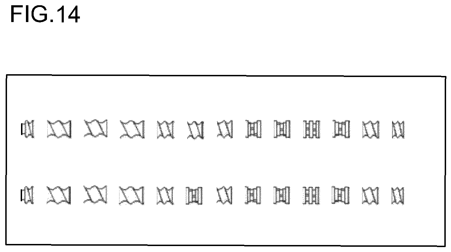

While Embodiment 1 described an example where an assembly error of the screw pieces 3a is detected based on the appearance data obtained by taking an image of or measuring the distance from the screws 3, an assembly error of the screw pieces 3a may be detected using the appearance data obtained by taking an image of or measuring the distance from the multiple screw pieces 3a constituting the first screw 3 and the multiple screw pieces 3a constituting the second screw 3 that are aligned before being assembled (see FIG. 14).

While Embodiment 1 described an example where two-dimensional screw image data is processed, three-dimensional data of the screws 3 may be employed for detecting an assembly error of the screw pieces 3a. The three-dimensional data of the screws 3 can be obtained based on images taken from multiple different positions and angles using a camera or the like. The three-dimensional data of the screws 3 can also be obtained from the point group data obtained by measuring the distances. By comparing the three-dimensional data of the first screw 3 with the three-dimensional data of the second screw 3, the difference data between the three-dimensional data is calculated, and by calculating the matching score, an assembly error of the screw pieces 3a can be detected.

While Embodiment 1 described an example where the difference between the luminance value of the first screw partial image and the luminance value of the second screw partial image is calculated to detect an assembly error of the screw pieces 3a, the detection processing is not limited thereto. For example, the arithmetic unit 11 may determine an assembly error of the screw pieces 3a by identifying the types of the multiple screw pieces 3a that constitute the two screws 3 and then determining the presence or absence of a difference in the screw pieces 3a that constitute the two screws 3.

In addition, the arithmetic unit 11 may determine an assembly error of the screw pieces 3a by calculating the features of the multiple screw pieces 3a that constitute the two screws 3 by pattern matching processing and then determining the presence or absence of a difference in the feature of the screw pieces 3a that constitute the two screws 3.

### Embodiment 2

The screw piece assembly error detection device 1 according to Embodiment 2 is different from that of Embodiment 1 in that an assembly error of the screw pieces 3a is detected using a learning model. Since the other configurations of the screw piece assembly error detection device 1 are similar to those of the screw piece assembly error detection device in Embodiment 1, corresponding parts are designated by similar reference codes and detailed description thereof will not be made.

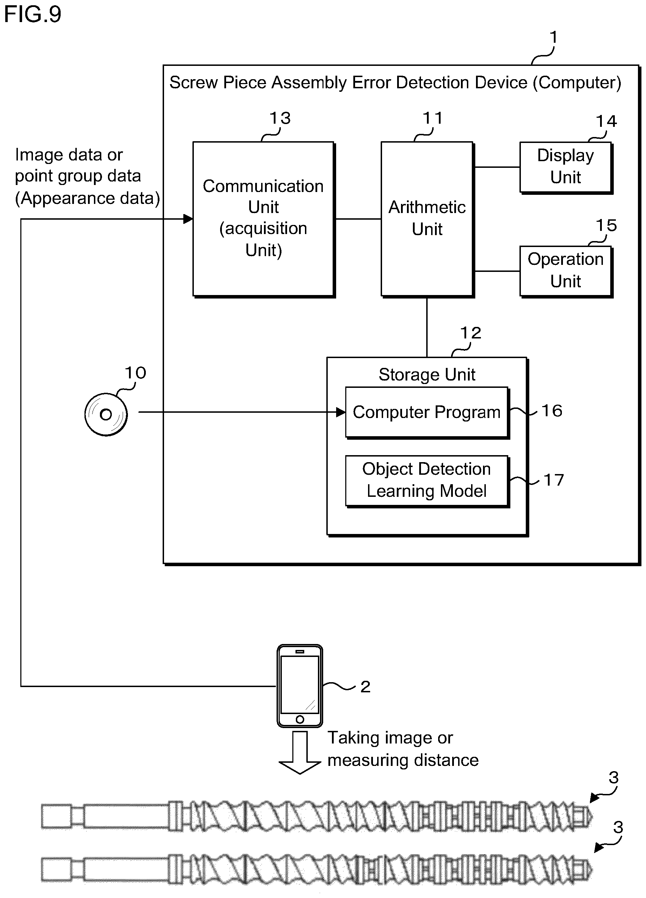

FIG. 9 is a schematic view illustrating an example of the configuration of the screw piece assembly error detection device 1 according to Embodiment 2. The storage unit 12 of the screw piece assembly error detection device 1 according to Embodiment 2 stores an object detection learning model 17.

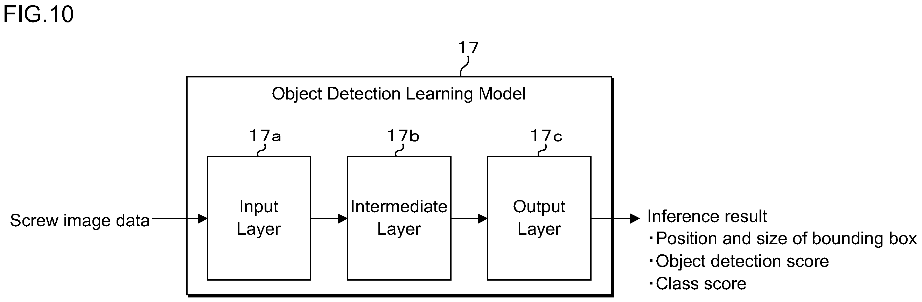

FIG. 10 is a conceptual diagram illustrating the object detection learning model 17 according to Embodiment 2. The object detection learning model 17 includes a convolutional neural network (CNN) having been trained by deep learning, for example. The object detection learning model 17 includes an input layer 17a that receives input of screw image data, an intermediate layer 17b that extracts features of the screw image data and an output layer 17c that outputs an inference result related to the detected object. The object detection learning model 17 is a YOLO model, for example.

Each layer of the object detection learning model 17 has multiple nodes. Nodes of respective layers are connected by the edges. Each layer has an activation function (response function), and the edges have weights. Values output from the nodes of each layer are calculated from the values of the nodes in the preceding layer, the weights of the edges and the activation function of the layer. The weights of the edges can be changed by learning.

The input layer 17a of the object detection learning model 17 has multiple nodes that accept the input of the screw image data, that is, the pixel values of the respective pixels constituting the image of the surface of the screw 3, and passes the input pixel values to the intermediate layer 17b.

The intermediate layer 17b has multiple sets of convolutional layers (CONV layer) and pooling layers, and a fully connected layer. Each convolutional layer performs filtering processing on the values output from the nodes in the preceding layer to extract a feature map. Each pooling layer reduces the feature map output from the convolutional layer to obtain a new feature map.

The output layer 17c has a node that outputs the final inference result related to an object detected from the screw image. The inference result includes the position of the central coordinates of and the vertical and horizontal dimensions of a bounding box that surrounds an object, an object detection score indicating certainty that the image surrounded by the bounding box is an image of the object, and a class score indicating certainty that the object belongs to a specific class.

More specifically, the normalized screw image to be input to the input layer 17a is divided into multiple grid cells. For each grid cell, the position, dimensions, object score and class score are evaluated. The position of the bounding box in a grid cell is expressed as, for example, the position relative to the upper left vertex or the central position of the grid.

Assuming that the screw image is divided into S × S grid cells, the number of bounding boxes to be detected per grid is B, and the number of classes for the object is C, the output obtained from the output layer 17c is a tensor of S × S × (B × 5 + C) dimension, for example.

Though the output obtained from the output layer 17c contains multiple bounding boxes that overlap one another, post processing to eliminate the overlapping bounding boxes, for example, NMS (Non-Maximum Suppression) processing is performed to obtain the position, the dimensions, the object detection score and the class score of the bounding box that has the highest certainty out of the bounding boxes surrounding one or more objects contained in the screw image.

A method of generating the object detection learning model 17 is described. Training data including multiple screw image data and annotation files of the respective screw image data are prepared. Each annotation file is teacher data indicating a correct value to be attached to the corresponding screw image. Specifically, the annotation file is data indicating the position of the central coordinates, the vertical and horizontal dimensions and the class of a bounding box that surrounds the image of the screw piece 3a contained in the corresponding screw image. The class indicates a group classified depending on the type of the screw piece 3a. The type of the screw piece 3a is defined by the L/D, the lead, the lead angle, the number of strips and the like of the screw piece 3a.

The weight coefficients of a neural network are optimized such that the error (value of a given loss function or error function) between data output, when a screw image of the training data is input to a CNN, from the CNN and data indicated by the teacher data is reduced by using an error backpropagation method and error gradient descent to thereby generate an object detection learning model 17.

Though YOLO is described as an example of the object detection learning model 17, the object detection learning model 17 may be constructed using R-CNN, Fast R-CNN, Faster R-CNN and other CNNs. The object detection learning model 17 may also be used employing algorithms such as decision trees, random forests and Support Vector Machine (SVM) or the like. In addition, the object detection learning model 17 may be constructed with the combination of the multiple algorithms described above.

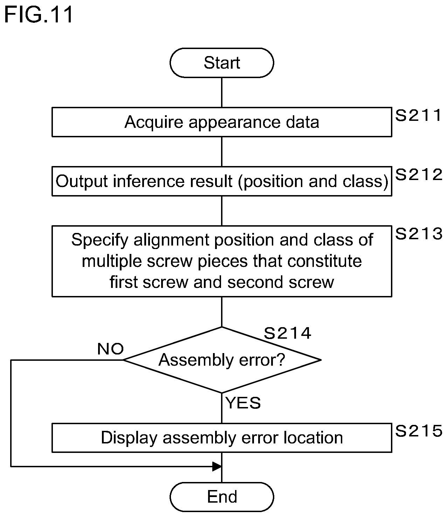

FIG. 11 is a flowchart depicting a processing procedure of the screw piece assembly error detection method according to Embodiment 2. The arithmetic unit 11 of the screw piece assembly error detection device 1 acquires appearance data from the measurement device 2 via the communication unit 13 (step S211). The appearance data is data indicating the appearance of the two screws 3 or of the aligned multiple screw pieces 3a constituting the two screws 3. The following description is made assuming that the arithmetic unit 11 here employs two-dimensional screw image data based on the appearance data.

The arithmetic unit 11 inputs screw image data to the object detection learning model 17 to obtain a feature map (S212). The feature map contains information for specifying the position and class of an object contained in the screw image.

The arithmetic unit 11 specifies the alignment position and the class of each of the multiple screw pieces 3a that constitute the two screws 3 based on the feature map (step S213). Specifically, from the feature map, the coordinates of the central positions, the vertical and horizontal sizes, object detection scores and class scores of the bounding boxes that respectively surround the multiple screw pieces 3a can be obtained. The arithmetic unit 11 specifies the positions, sizes and classes of the bounding boxes of the multiple screw pieces 3a based on the object detection scores and the class scores. For example, the class with the object detection score equal to or greater than a threshold and the highest-class score is specified.

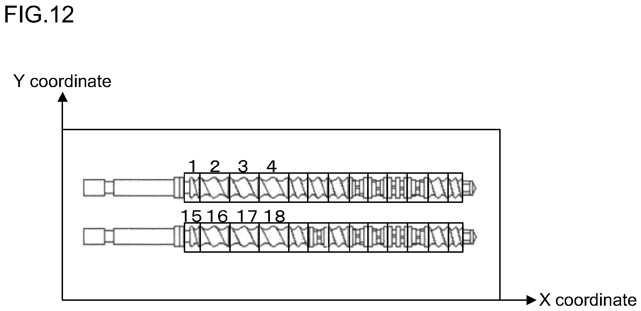

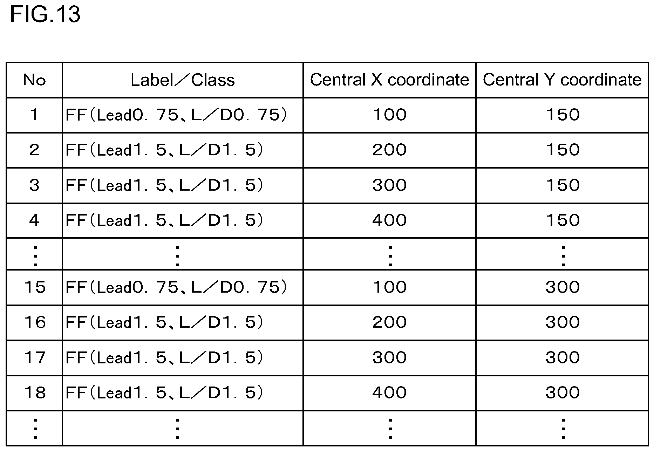

FIG. 12 is a conceptual diagram illustrating a detection result of objects, and FIG. 13 is a table depicting detection results of objects. In FIG.12, the rectangular frame represents a bounding box, and the numerals "1," "2," ... are numbers (No.) to identify the specified screw pieces 3a. The central position of the bounding box is represented by the X coordinate and the Y coordinate. "FF" indicates the type of the screw piece 3a belonging to a specific class (forward flight piece).

By referring to the value of the central Y coordinate of the bounding box, the arithmetic unit 11 can determine whether the object belongs to the first screw 3 or to the second screw 3. For example, as illustrated in FIGs. 12 and 13, the bounding box with the value of the central Y coordinate of approximately 300 surrounds the screw pieces 3a corresponding to the first screw 3. The bounding box with value of the central Y coordinate of approximately 150 surrounds the screw pieces 3a belonging to the second screw 3.

Next, the arithmetic unit 11 compares, in the alignment position and the class, the multiple screw pieces 3a constituting the first screw 3 with the multiple screw pieces 3a constituting the second screw 3 to thereby determine the presence or absence of an assembly error of the screw pieces 3a (step S214). Specifically, the arithmetic unit 11 determines the presence or absence of a screw piece 3a with the same alignment position (x coordinate) in the lengthwise direction of the screw image but a different type. For example, the arithmetic unit 11 determines whether or not the screw piece 3a surrounded by the bounding box with the central X coordinate of 100 (No. 1) has the same class as the screw piece 3a surrounded by the bounding box with the central X coordinate of 100 (No. 15). If they have different classes, the arithmetic unit 11 determines that an assembly error of the screw pieces 3a is present.

If determining that no assembly error is present (step S214: NO), the arithmetic unit 11 ends the processing. If determining that an assembly error is present (step S214: YES), the arithmetic unit 11 displays the location where the assembly error of the screw pieces 3a is present on the display unit 14 (step S215). The position of the screw piece 3a the same in the alignment position in the lengthwise direction of the screw image and different in the class is displayed by the display unit 14. The method of displaying the location of the assembly error is the same as that in Embodiment 1.

The screw piece assembly error detection device 1 according to Embodiment 2 thus configured can infer the alignment positions and types (classes) of the multiple screw pieces 3a that constitute the screws 3 for the twin-screw extruder A. The screw piece assembly error detection device 1 can determine the presence or absence of an assembly error of the screw pieces 3a constituting the two screws 3 loaded in the twin-screw extruder A and can display the location where the assembly error is present. This allows for detection of an assembly error of the screw pieces 3a without relying on human hands.

In addition, with the use of the machine learning model, the positions and types of the screw pieces 3a that constitute the screws 3 can be inferred with high precision.

While Embodiment 2 described an example where an assembly error of the screw pieces 3a is detected based on the appearance data obtained by taking an image of or measuring the distance from the two screws 3, appearance data may be used that is obtained by taking an image of or measuring the distance from the multiple screw pieces 3a aligned before being assembled.

FIG. 14 is a schematic diagram illustrating another example of a method of capturing appearance data. The arithmetic unit 11 acquires the screw image data obtained by taking an image of the multiple screw pieces 3a aligned with spaces as illustrated in FIG. 14. The arithmetic unit 11 inputs the screw image data to the object detection learning model 17 to thereby detect the multiple screw pieces 3a and recognize the alignment positions and types of the screws 3.

For a screw image obtained by taking an image of the assembled screw 3, the boundary between screw pieces 3a may incorrectly be determined. By taking images of the screw pieces aligned with spaces before assembly, correct discrimination of the screw pieces 3a is more feasible, and thus an assembly error of the screw piece 3a may more accurately be detected.

The multiple screw pieces 3a may be assigned with marks that enable image identification. This allows the arithmetic unit 11 to correctly recognize each of the multiple screw pieces 3a based on the images of the marks contained in the screw image. The screw pieces 3a may be assigned with different marks based on the types of the screw pieces 3a. This allows for detection of the alignment positions and types of the screw pieces 3a that constitute the screws 3 with higher precision.

While Embodiment 2 described an example where the two-dimensional screw image data is processed, three-dimensional data may be used for generating alignment data. The three-dimensional data of the screws 3 can be obtained based on images taken from different positions and angles using a camera or the like. The three-dimensional data of the screws 3 can be obtained based on the point group data obtained by measuring the distances. By using the learning model or matching of the three-dimensional data, the arithmetic unit 11 can likewise detect an assembly error of the screw pieces 3a.

### Embodiment 3

The screw piece assembly error detection device 1 according to Embodiment 3 is different from that of Embodiment 2 in the method of specifying the alignment order and the type of the screw pieces 3a. Since the other configurations of the screw piece assembly error detection device 1 are similar to those of the screw piece assembly error detection devices of Embodiment 1 and 2, corresponding parts are designated by similar reference codes and detailed description thereof will not be made.

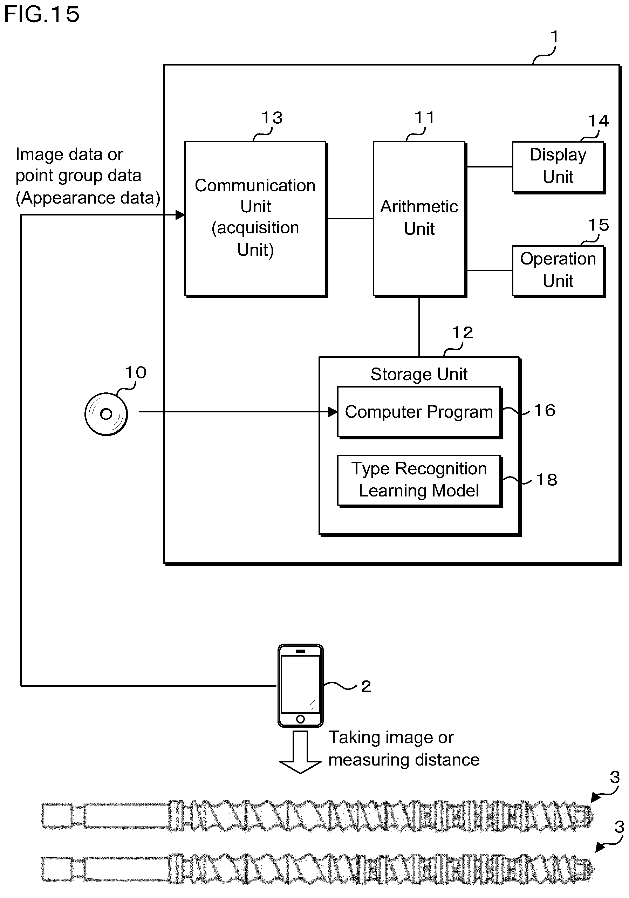

FIG. 15 is a schematic diagram illustrating an example of the configuration of a screw piece assembly error detection device according to Embodiment 3. The storage unit 12 of the screw piece assembly error detection device 1 according to Embodiment 3 stores a type recognition learning model 18 instead of the object detection learning model 17.

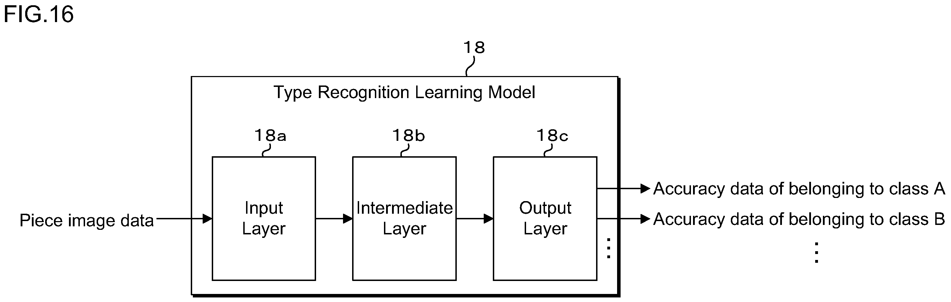

FIG. 16 is a conceptual diagram illustrating a type recognition detection learning model according to Embodiment 3. The type recognition detection learning model is an image recognition model. The type recognition learning model 18 includes a convolutional neural network (CNN) having been trained by deep learning, for example. The configuration of the neural network itself is similar to that of the object detection learning model 17. The type recognition learning model 18 includes an input layer 18a that receives input of piece image data, which is data of an image part of the screw piece 3a (hereafter referred to as a piece image), an intermediate layer 18b that extracts features of the piece image data, and an output layer 18c that outputs accuracy data indicating the accuracy of a piece image belonging to each of multiple classes.

A method of generating the type recognition learning model 18 is described. First, training data including multiple piece image data and teacher data indicating a class to which each piece image belongs are prepared. The class indicates the groups that are classified according to the type of the screw pieces 3a. The arithmetic unit 11 optimizes the weight coefficients of the neural network using, for example, error backpropagation and error gradient descent methods such that the error (value of a given loss function or error function) between data output, when a piece image of the training data is input to a CNN, from the CNN and data indicated by the teacher data is reduced, to thereby generate the type recognition learning model 18.

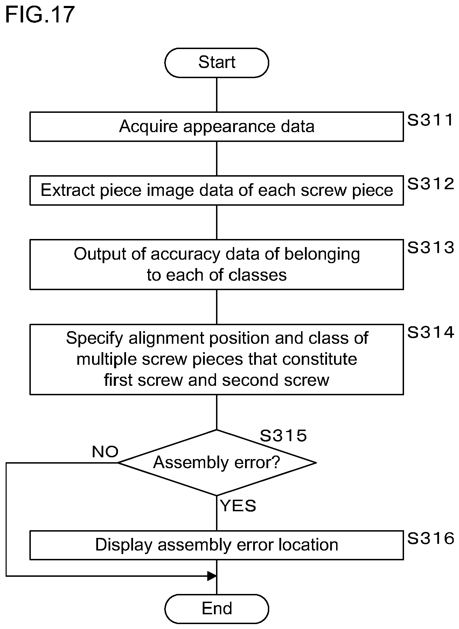

FIG. 17 is a flowchart depicting a processing procedure related to a screw piece assembly error detection method according to Embodiment 3. The arithmetic unit 11 of the screw piece assembly error detection device 1 acquires appearance data from the measurement device 2 via the communication unit 13 (step S311) and extracts piece appearance data corresponding to the piece image (step S312).

As in Embodiment 1 and Embodiment 2, the arithmetic unit 11 is assumed to use two-dimensional screw image data based on the appearance data. In Embodiment 3, image data obtained by taking an image of the multiple screw pieces 3a aligned with spaces is preferably used as screw image data. The piece appearance data is piece image data corresponding to the part of the screw piece 3a in the screw image. The arithmetic unit 11 extracts a piece image by the processing such as pattern matching or the like. Note that a piece image may be extracted using a machine learning (object detection) model.

There is no need to specify the type of the screw piece 3a at this stage, and it only needs to extract an image similar to the image of the screw piece 3a. Note that the arithmetic unit 11 recognizes the position of the piece image by extracting the piece image. In other words, the arithmetic unit 11 detects the alignment position of each of the multiple screw pieces 3a.

Next, the arithmetic unit 11 inputs the extracted piece image to the type recognition learning model 18 and obtains output of the accuracy data indicating the accuracy of a piece image belonging to each of multiple classes (step S313). The arithmetic unit 11 specifies the classes of the multiple screw pieces 3a constituting the first screw 3 and the second screw 3 based on the accuracy data output from the type recognition learning model 18 (step S314).

As in Embodiment 1 and Embodiment 2, the arithmetic unit 11compares the multiple screw pieces 3a constituting the first screw 3 with the multiple screw pieces 3a constituting the second screw 3 for the alignment positions and the classes to thereby determine the presence or absence of an assembly error of the screw pieces 3a (step S315). If determining that no assembly error is present (step S315: NO), the arithmetic unit 11 ends the processing. If determining that an assembly error is present (step S315: YES), the arithmetic unit 11 displays the location where the assembly error of the screw pieces 3a is present on the display unit 14 (step S316).

The screw piece assembly error detection device 1 according to Embodiment 3 can infer the alignment positions and types of the multiple screw pieces 3a that constitute the screws 3 for the twin-screw extruder A and can detect an assembly error of the screw pieces 3a, as in Embodiment 1 and Embodiment 2.

While Embodiment 2 and Embodiment 3 described examples where the alignment positions and types of the multiple screw pieces 3a that constitute the screws 3 are inferred mainly by using a learning model, they may be inferred by performing rule-based image processing.

For example, the screw piece assembly error detection device 1 may be configured to infer the alignment positions and types of the screw pieces 3a by template matching processing. The storage unit 12 of the screw piece assembly error detection device 1 stores the template images of the multiple types of the screw pieces 3a and the types of screw pieces 3a in association with each other. The arithmetic unit 11 specifies the positions and types of the multiple screw pieces 3a contained in the screw image by the template matching processing using the template images stored in the storage unit 12. The processing to be performed after specifying the alignment positions and types of the multiple screw pieces 3a is similar to those described in Embodiment 2 and Embodiment 3.

The screw piece assembly error detection device 1 may be configured to infer the alignment positions and types of the screw pieces 3a based on the features. The storage unit 12 of the screw piece assembly error detection device 1 stores the features of the multiple types of the screw pieces 3a and the types of the screws 3a in association with each other. The features include various types of features, such as edges, shading changes or positional relationships between characteristic points. The arithmetic unit 11 specifies the positions and types of the multiple screw pieces 3a contained in the screw image in comparison with the features stored in the storage unit 12. The processing to be performed after specifying the alignment positions and types of the multiple screw pieces 3a is similar to those of Embodiment 2 and Embodiment 3.

### Reference Signs List

- 1: detection device
- 2: measurement device
- 3: screw
- 3a: screw piece
- 10: recording medium
- 11: arithmetic unit
- 12: storage unit
- 13: communication unit
- 14: display unit
- 15: operation unit
- 16: computer program
- 17: object detection learning model
- 18: type recognition learning model
- 131: detection result display screen
- 131a: check image
- A: twin-screw extruder

## Claims

1. A screw piece assembly error detection device comparing constructions of two screws for a twin-screw extruder constructed by assembling a plurality of screw pieces and detecting an assembly error of the screw pieces, comprising:
an acquisition unit that acquires appearance data indicating an appearance of the plurality of screw pieces aligned to constitute the two screws or of the two screws; and
an arithmetic unit that calculates a difference between the plurality of screw pieces that constitute a first screw of the screws and the plurality of screw pieces that constitute a second screw of the screws, based on the acquired appearance data.

2. The screw piece assembly error detection device according to claim 1, wherein
the arithmetic unit
calculates a difference between appearance data of the first screw and appearance data of the second screw,
calculates an index value indicating a magnitude of the difference at a plurality of positions in a lengthwise direction of the screws, and
determines a presence or an absence of an assembly error of the screw pieces based on a calculated index value.

3. The screw piece assembly error detection device according to claim 2, further comprising a display unit that displays a position of at least one of the screw pieces that is determined as an assembly error based on the index value.

4. The screw piece assembly error detection device according to claim 1, wherein
the arithmetic unit
infers alignment positions and types of the plurality of screw pieces constituting the first screw and alignment positions and types of the plurality of screw pieces constituting the second screw, and
respectively compares the alignment positions and the types of the plurality of screw pieces constituting the first screw with the alignment positions and the types of the plurality of screw pieces constituting the second screw.

5. The screw piece assembly error detection device according to claim 4, wherein
to an object detection learning model so trained as to output data indicating alignment positions and types of the plurality of screw pieces if the appearance data is input, the arithmetic unit inputs the acquired appearance data by the acquisition unit, to output data indicating alignment positions and types of the plurality of screw pieces.

6. The screw piece assembly error detection device according to claim 4, wherein the arithmetic unit infers data indicating alignment positions and types of the plurality of screw pieces by performing rule-based image processing on the appearance data.

7. The screw piece assembly error detection device according to any one of claims 4 to 6, further comprising a display unit that displays a position of at least one of the screw pieces having an equal alignment position and a different type.

8. The screw piece assembly error detection device according to any one of claims 1 to 7, wherein the appearance data includes image data obtained by imaging the plurality of screw pieces or the screws, or point group data obtained by measuring distances from a plurality of points on a surface of the screws or the plurality of screw pieces.

9. A screw piece assembly error detection method for comparing constructions of two screws for a twin-screw extruder constructed by assembling a plurality of screw pieces and detecting an assembly error of the screw pieces, comprising:
acquiring appearance data indicating an appearance of the plurality of screw pieces aligned to constitute the two screws or of the two screws; and
calculating a difference between the plurality of screw pieces that constitute a first screw of the screws and the plurality of screw pieces that constitute a second screw of the screws, based the acquired appearance data.

10. A computer program causing a computer to execute processing of comparing constructions of two screws for a twin-screw extruder constructed by assembling a plurality of screw pieces and detecting an assembly error of the screw pieces, comprising:
acquiring appearance data indicating an appearance of the plurality of screw pieces aligned to constitute the two screws or of the two screws; and
calculating a difference between the plurality of screw pieces that constitute a first screw of the screws and the plurality of screw pieces that constitute a second screw of the screws, based on the acquired appearance data.
